# EUROPÄISCHE PATENTSCHRIFT

(11) **EP 2 151 420 B1**
(45) Veröffentlichungstag und Bekanntmachung des Hinweises auf die Patenterteilung: **23.01.2019**
(21) Anmeldenummer: 09164275.1
(22) Anmeldetag: 01.07.2009
(51) Int. Cl.: C04B 24/42, C08G 77/50, C09D 183/14

(54) **HYDROPHOBIERUNG VON BAUELEMENTEN AUS MINERALFASERN**
WATER REPELLENT TREATMENT FOR BUILDING ELEMENTS CONTAINING MINERAL FIBRES
IMPERMÉABILISATION D'ÉLÉMENTS DE CONSTRUCTION EN FIBRES MINÉRALES

(30) Priorität: 05.08.2008 DE 102008040986
(43) Veröffentlichungstag der Anmeldung: 10.02.2010
(73) Patentinhaber: Evonik Degussa GmbH, 45128 Essen (DE)
(72) Erfinder: Herrwerth, Sascha, 45134 Essen (DE); Koenig, Frank, 45884 Gelsenkirchen (DE); Ferenz, Michael, 45147 Essen (DE); Mund, Christian, 45149 Essen (DE)

(56) Entgegenhaltungen:
- EP-A2- 0 255 205
- DE-C2- 19 813 848
- JP-A- 2002 121 285
- US-A- 4 248 664
- US-A1- 2007 190 306
- Anonymous: "RÖMPP - Glasfasern - Georg Thieme Verlag KG", , 1 August 2010 (2010-08-01), XP055203669, Retrieved from the Internet: URL:https://roempp.thieme.de/roempp4.0/do/ data/RD-07-01181 [retrieved on 2015-07-21]

## Beschreibung

Bauelemente aus Mineralfasern, wie Platten, Schalen oder Formteile sind wohlfeile Produkte. So sind Mineralfaserdämmplatten die wichtigsten Dämmstoffe im Baubereich. Insbesondere beim Innenausbau werden Mineralfaserplatten für die Wärme-, Kälte- und Schalldämmung eingesetzt. Des Weiteren finden Mineralfaserbauteile im Bereich des Brandschutzes Einsatz.

Mineralfaserbauteile werden aus mineralischen Fasern hergestellt, gegebenenfalls unter Zusatz verschiedener Additive, wie zum Beispiel Füll- und Bindemittel.

Glaswolle besteht zum Beispiel zu 60 % aus Altglas. Die restlichen Bestandteile setzen sich aus den in der Glasindustrie üblichen Mineralien wie Quarzsand, Soda, Dolomit und Kalkstein zusammen. Steinwolle besteht aus den natürlichen Gesteinen Basalt und Diabas, teilweise ergänzt durch Dolomit und Kalkstein.

Diese Rohstoffe sind mineralischen Ursprungs und noch lange verfügbar. In einer ersten Produktionsstufe werden die Rohstoffe geschmolzen und die dabei entstehenden 0,1 bis 20 µm dicken Fasern werden durch Ziehen, Blasen oder Schleudern zu Bahnen, Platten oder Filzen weiterverarbeitet. Dabei werden zumeist Phenol-Formaldehydharze als Bindemittel zugegeben (Anteil ca. 7 %). Öle und weitere Zusätze in einem Anteil von 1 % verbessern die Wasserabweisung.

Zur Herstellung von Faserplatten wird zumeist auf einem endlos umlaufenden Siebband ein Faservlies einer aus Mineralfaser, Füllmittel und Bindemittel bestehenden Faserstoff-Suspension gebildet und dann auf einer Entwässerungsstrecke entwässert. Anschließend wird das Faservlies durch eine Trockenstrecke geführt. Danach erfolgt die Formung, die Pressung, die Entwässerung sowie eventuell die Aufbringung eines Musters oder Ornaments auf dessen Oberfläche. Abschließend wird in der Regel thermisch getrocknet.

Durch die Verwendung von bestimmten Zusatzstoffen lassen sich die Eigenschaften von Mineralfaserplatten gezielt beeinflussen. So sind zum Beispiel aus der Patentschrift DE-B-2732387 Mineralfaserplatten bekannt, die durch Tränken einer durch ein organisches Kunststoffbindemittel vorgebundenen Mineralfaserplatte mit einer wässrigen Aufschlämmung eines Bindetons und anschließendes Verfestigen durch Tempern hergestellt werden. Aus der EP-A-0006362 sind Platten bekannt, welche zur Verstärkung anorganische Fasern enthalten.

Weitere typische Zusatzstoffe bzw. Zuschlagstoffe sind Aluminiumoxid, Ton, Zr0₂, Ti0₂, organische Fasern bzw. organische feinteilige Stoffe als Ausbrennsubstanzen, Tenside und andere Hilfsstoffe.

Die EP-A-0347810 beschreibt Mineralfaserplatten und Methoden zur Herstellung derselben, wobei ebenfalls geeignete Bindemittel eingesetzt werden, vorzugsweise Stärke. Eine solche unbeschichtete Mineralfaserplatte enthält 55 bis 70 Gew.-% Mineralfaser, 15 bis 25 Gew.-% mineralische Füllstoffe und 6 bis 14 Gew.-% eines Bindemittels auf Stärkebasis. Platten, die Stärke als Bindemittel enthalten, haben aufgrund der stofflichen Eigenschaften von Stärke in der Regel eine ungenügende Feuchtigkeitsstabilität.

Durch die Aufnahme von Feuchtigkeit können Mineralfasern hydratisieren und beginnen dann ihre Faserform zu verlieren, so dass sich deren mechanischen Eigenschaften grundlegend verändern. Dies ist in der Regel unerwünscht.

Zudem ist die Aufnahme von Feuchtigkeit nicht wünschenswert, wenn Mineralfaserplatten in Innenräumen als Deckenplatten verwendet werden. Deckenplatten werden in der Regel nur an den Rändern durch Aufhängungen fixiert. Die Aufnahme von Feuchtigkeit führt zu einer Gewichtszunahme der Platte. Dies kann dazu führen, dass diese sich verformt bzw. durchhängt. Bei Faserplatten die zur Wärmeisolierung eingesetzt werden, führt Feuchtigkeitsaufnahme zu einer deutlichen Verschlechterung der isolierenden Wirkung.

Verwitterung, Pilzbefall oder Fleckenbildung sind weitere mögliche, in der Regel unerwünschte, Folgen einer zu hohen Wasseraufnahme.

Neben den wasserabweisenden Eigenschaften können durch den Zusatz von Hydrophobierungsmitteln aber auch andere Eigenschaften gezielt beeinflusst werden, wie z.B. die Flexibilität, die Organophilie oder die Volumenvergrößerung von loser, ungebundener Mineralwolle.

Es gibt verschiedene Ansätze um die Feuchtigkeitsstabilität von Bauteilen aus Mineralfasern zu verbessern. So offenbart die DE-A-19813848 ein Verfahren zur Herstellung feuchtigkeitsstabilisierter Mineralfaserplatten oder Beschichtungsmassen für Mineralfaserrohplatten, dadurch gekennzeichnet, dass dem Mineralfaservlies oder der Beschichtungsmasse Reaktionsmittel zugesetzt werden, die sich im Verlauf der Trocknung mit dem Bindemittel auf Stärkebasis bei Temperaturen von 110 bis 175 °C zu einem feuchtigkeitsstabilisierten Produkt umsetzen.

In der Praxis werden auch nicht reaktive Siliconöle bzw. deren Emulsionen während der Herstellung der Mineralfaserbauteile zugesetzt, um die Feuchtigkeitsstabilität der Mineralfaserplatten zu verbessern. Ein Nachteil dieser Methode ist, dass die Hydrophobierung der Bauteile nicht permanent ist. Weiterhin führt der Zusatz von nicht reaktiven Siliconölen zu dem sogenannten Debondingeffekt. Dieser beschreibt die Abnahme der Festigkeit des Bauteiles aufgrund von einer schlechteren Haftung der Fasern untereinander. Vermutlich ist dies darauf zurückzuführen, dass das Siliconöl als eine Art Gleitmittel zwischen den einzelnen Fasern wirkt. Ein weiterer Nachteil dieser Methode ist, dass der Zusatz von Siliconöl die spätere Überlackierung des Bauteiles erschwert, da es verstärkt zu Störungen der Lack- bzw. Farbschicht kommt.

Durch die Verwendung von verzweigten oder linearen Siloxanen, deren Polymerketten mit Alkoxyfunktionen terminiert sind, als in JP 2002-121285 A offenbart, lassen sich diese Nachteile teilweise beseitigen. Vermutlich werden die Polymerketten durch Kondensationsreaktionen auf der Faser fixiert. Jedoch ist die Geschwindigkeit der Kondensation vergleichsweise gering. Dies bedeutet in der Praxis, dass die Bandgeschwindigkeit zur Herstellung der Mineralfaserbauteile verringert werden muss um eine ausreichende Fixierung der Siloxane zu erreichen.

Eine weitere Methode der Hydrophobierung von Mineralfaserbauteilen besteht in dem Zusatz von alkoxyfunktionellen Silanen, zum Beispiel Octyltriethoxysilan. Diese Methode wird in der Praxis jedoch kaum angewendet, da zum einen kommerziell erhältliche Silane vergleichsweise teuer sind und zudem nur bei hohen Einsatzkonzentrationen eine ausreichende Hydrophobierung beobachtet wird. Bei der Aufbringung von alkoxyfunktionellen Silanen bilden sich, bezogen auf die Einsatzkonzentration und die vergleichsweise geringe Molekülgröße, große Mengen an Alkoholen, insbesondere Ethanol. Dies führt dazu, dass bei der Trocknung große Mengen an brennbare Substanzen frei werden, was zudem ein sicherheitsrelevantes Problem darstellt.

In der Gipsindustrie werden SiH-funktionelle Siloxane zur Hydrophobierung von Bauteilen eingesetzt. Derartige Verbindungen finden jedoch keinen Einsatz in der Mineralfaserhydrophobierung, da bei der Hydrophobierung große Mengen an Wasserstoff frei werden, was wiederum ein sicherheitsrelevantes Problem darstellt. Zudem sind die hier eingesetzten SiH-funktionellen Siloxane verhältnismäßig teuer.

Die erfindungsgemäße Aufgabe besteht daher darin neuartige Hydrophobierungsmittel für mineralfaserbasierte Bauteile bereitzustellen, die zu verbesserter Hydrophobierung führen und die Nachteile der aus dem Stand der Technik bekannten Mittel überwinden.

Überraschenderweise wurde gefunden, dass sich die Feuchtigkeitsaufnahmefähigkeit von Mineralfaserbauteilen dauerhaft und zudem sehr effektiv reduzieren lässt, indem während der Herstellung des Mineralfaserbauteils reaktive Siloxane der allgemeinen Formel (I) zugesetzt werden.

Die erfindungsgemäßen Siloxane zeichnen sich dadurch aus, dass sich am Siloxan-Rückgrat mehrfach funktionelle Silylalkoxy-Modifikationen befinden. Diese Mehrfachsubstitution führt zu einer deutlich verbesserten Hydrophobierung im Vergleich zur Verwendung von reaktiven Siloxanen nach dem Stand der Technik.

Mₐ M'_{b} D_{c} D'_{d} D^{alkoxy}ₑ T_{f} Q_{g} (I)

wobei
M = (R¹₃SiO_{1/2}), M' = (R¹₂R²SiO_{1/2}),
D = (R¹₂SiO_{2/2}), D' = (R¹R³SiO_{2/2}), D^{alkoxy} = (R¹R⁴SiO_{2/2}),
T = (R¹SiO_{3/2}), Q = (SiO_{4/2}) und
a = 0 - 22, bevorzugt 0 - 10, insbesondere 0 - 2
b = 0 - 22, bevorzugt 0 - 10, insbesondere 0 - 2
c = 5 - 400, bevorzugt 10 - 200, insbesondere 15 - 150 d = 0 - 20, bevorzugt 0 - 10, insbesondere 0
e = 0 - 40, bevorzugt 0 - 30, insbesondere 0 - 20
f = 0 - 10, bevorzugt 0 - 4, insbesondere 0
g = 0 - 10, bevorzugt 0 - 4, insbesondere 0
a + b ist größer oder gleich 2
b + e ist größer oder gleich 2
R¹ = Methyl oder Phenyl,
R² = gleiche oder verschiedene Reste aus der Gruppe: R³, R⁴, für e kleiner oder gleich 1 gilt R² = R⁴,
R³ = gleiche oder verschiedene Polyetherreste, bevorzugt gleiche oder verschieden Polyetherreste der allgemeinen Formel (II) oder H, 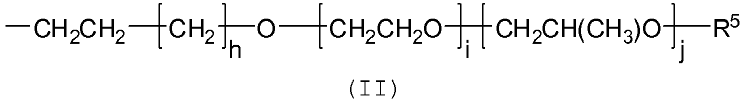 wobei
   - h =: 0 - 10, bevorzugt 0 - 4, insbesondere 1,
   - i =: 0 - 60, bevorzugt 0 - 40, insbesondere 0 - 20,
   - j =: 0 - 60, bevorzugt 0 - 40, insbesondere 0 - 20, mit der Maßgabe, dass i + j größer oder gleich 3 ist,

   - R⁵ =: gleiche oder verschiedene Reste aus der Gruppe: Alkyl, Aryl, H oder -C(O)R⁶, insbesondere H, Methyl, Ethyl, Phenyl oder Acetyl,
   - R⁶ =: gleiche oder verschiedene Alkyl- oder Aryl-Reste, bevorzugt Methyl, Ethyl, Propyl, Butyl oder Phenyl, insbesondere Methyl oder Ethyl und
   - R⁴ =: gleiche oder verschiedene Reste der allgemeinen Formel (III)

   -(CH₂)ₖ-Si(R⁶)ₗ(OR⁶)₃₋ₗ (III)
   - k =: 2 - 12, bevorzugt 2 - 3, insbesondere 2,
   - l =: 0 bis kleiner oder gleich 2, bevorzugt 0 - 1, insbesondere 0 ist.

Siloxane weisen im Allgemeinen eine gewisse Molekulargewichtsverteilung auf. Je nach Herstellmethode des zugrundeliegenden Siloxangerüstes können die modifizierten Einheiten statistisch über die Siloxanhauptkette verteilt vorliegen aber auch blockweise auftreten. Auch der Funktionalitätsgrad der einzelnen Polymermoleküle unterliegt einer Verteilung. Die Indizes a, b, c, d, e, f und g der im Rahmen dieser Erfindung eingesetzten Siloxane stellen deshalb Mittelwerte dar. Die mit den Indizes a, b, c, d, e, f und g gekennzeichneten Einheiten können in den Verbindungen der Formel (I) statistisch verteilt, blockweise oder in jeder anderen beliebigen Reihenfolge angeordnet vorliegen.

Die reaktive Gruppe R⁴ ist durchschnittlich mindestens zweimal pro Siloxankette vorhanden. Diese Funktion lässt sich zum Beispiel mittels Hydrosilylierung von alkoxyfunktionellen Vinylsilanen mit SiH-funktionellen Siloxanen an die Siloxankette anbinden, zum Beispiel durch Hydrosilylierung von Vinyltriethoxysilan.

Durch die Inkorporation der Gruppe R³, einem Polyether, lässt sich die Hydrophilie des Produktes gezielt einstellen, zum Beispiel um eine leichte Formulierbarkeit des Produktes zu erreichen. Es lassen sich verschiedenartige Polyether einsetzen. Diese werden in der Regel durch die Anlagerung von Alkoxiden an ein- oder mehrfach-funktionelle Alkohole oder ein Amin hergestellt. Aufgrund ihrer guten kommerziellen Verfügbarkeit eignen sich für den Aufbau von Polyethern insbesondere die Alkoxide: Ethylenoxid, Propylenoxid, Butylenoxid oder Styroloxid.

Werden verschiedene Monomere zur Herstellung der Polyether verwendet, zum Beispiel, um gezielt die Hydrophilie des Produktes einzustellen, so lässt sich durch die Reihenfolge der Zudosierung und durch die Einstellung verschiedener Reaktionsparameter die Verteilung der Monomereinheiten entlang der Polymerhauptkette steuern, so dass zum Beispiel unterschiedliche Monomereinheiten blockweise auftreten können oder graduell bzw. statistisch verteilt vorliegen. Die Verbindungen liegen in Form eines Gemisches vor mit einer im Wesentlichen durch statistische Gesetze geregelten Verteilung. Die Werte für die Indizes h, i und j stellen deshalb Mittelwerte dar. Die mit den Indizes h, i und j gekennzeichneten Einheiten können in den Verbindungen der Formel (II) statistisch verteilt, blockweise oder in jeder anderen beliebigen Reihenfolge angeordnet vorliegen.

Die Hydrophobierung der Glasfaserbauteile mit den erfindungsgemäßen Siloxanen kann auf jede nach dem Stand der Technik bekannte Weise erfolgen. So ist es zum Beispiel üblich, Mineralfasern bei deren Herstellung über Düsen mit Binderlösung anzusprühen. Das Hydrophobierungsmittel kann pur, als Lösung oder als Emulsion der Binderlösung zugesetzt werden oder über eine separate Sprühvorrichtung appliziert werden. Im Allgemeinen werden 0,001 bis 3 Gew.-%, bevorzugt 0,1 bis 1 Gew.-%, besonders bevorzugt 0,2 bis 0,4 Gew.-% Hydrophobierungsmittel bezogen auf Mineralfasergewicht eingesetzt.

Eine andere mögliche Methode der Applizierung ist das Zumischen des Hydrophobierungsmittels mit einem der Rohstoffe, zum Beispiel der Stärke, dem Clay oder dem Wasser. Auch hier ist es möglich, die erfindungsgemäßen Siloxane pur, als Lösung oder als Emulsion zuzusetzen. Aufgrund der Vielzahl der Anwendungen für Mineralfaserbauteile existieren zahlreiche Rezepturen. Typischerweise beinhalten Mineralfaserbauteile 30 bis 75 Gew.-% Mineralfaser, 20 bis 40 Gew.-% aus Ton und zu 3 bis 4 Gew.-% aus Stärke. Übliche weitere Bestandteile sind Latex, Borax oder Perlite (bis zu 40 Gew.-%), sowie weitere Zuschlags- und Hilfsstoffe.

Die erfindungsgemäßen Hydrophobierungsmittel aus der Gruppe der reaktiven Siloxane weisen Molmassen von 800 bis 60.000 g/mol, vorzugsweise 1.000 bis 25.000 g/mol und besonders bevorzugt 5.000 bis 10.000 g/mol auf und können durch die Vielzahl an reaktiven Gruppen pro Molekül vielfältige Bindungen mit dem Substrat dem Mineralfaserbaustoff, ausbilden. Die Konzentration der dabei ebenfalls entstehenden Alkohole ist im Vergleich zu den z.B. Alkoxysilanen deutlich reduziert und stellt kein Sicherheits- oder Handhabungsproblem mehr dar.

### Bespiele:

Im Folgenden werden verschiedene Beispiele zur Herstellung von erfindungsgemäßen Mineralfaserbauteilen beschrieben, die zeigen, dass die erfindungsgemäßen Siloxane das Wasseraufnahmenvermögen dieser Bauteile effektiv reduzieren. Diese Beispiele sind nur exemplarisch und schränken nicht den erfindungsgemäßen Bereich ein.

### 1) Herstellung erfindungsgemäßer Siloxane:

Im Folgenden ist die Herstellung von vier verschiedenen erfindungsgemäßen Siloxanen bzw. deren Emulsionen (OMS 1 bis 4) beschrieben:

### a) Herstellung OMS 1:

In einem 1 L-Dreihalskolben mit KPG-Rührer, Intensivkühler und Tropftrichter wurden 190 g Vinyltriethoxysilan vorgelegt und auf 100 °C geheizt. Anschließend wurden 15 ppm Pt in Form des Karstedt-Katalysators zugesetzt und 500 g eines SiH-funktionellen Siloxans der allgemeinen Formel (Me₃SiO_{1/2})₂(SiMe₂O_{2/2})₇₈(SiMeHO_{2/2})₁₀ langsam zudosiert. Die Dosiergeschwindigkeit wurde so gewählt, dass die Reaktionstemperatur nicht über 110 °C anstieg. Das Reaktionsgemisch wurde nach abgeschlossener Dosierung noch fünf Stunden bei 100 °C gerührt. Anschließend wurden die flüchtigen Anteile im Ölpumpenvakuum bei 130 °C am Rotationsverdampfer entfernt.

### b) Herstellung OMS 2:

In einem 1 L-Dreihalskolben mit KPG-Rührer, Intensivkühler und Tropftrichter wurden 66 g Vinyltriethoxysilan vorgelegt und auf 100 °C geheizt. Anschließend wurden 15 ppm Pt in Form des Karstedt-Katalysators zugesetzt und 507 g eines SiH-funktionellen Siloxans der allgemeinen Formel (HMe₂SiO_{1/2})₂(SiMe₂O_{2/2})₂₀₀(SiMeHO_{2/2})₆ langsam zudosiert. Die Dosiergeschwindigkeit wurde so gewählt, dass die Reaktionstemperatur nicht über 110 °C anstieg. Das Reaktionsgemisch wurde nach abgeschlossener Dosierung noch drei Stunden bei 100 °C gerührt. Anschließend wurden die flüchtigen Anteile im Ölpumpenvakuum bei 130 °C am Rotationsverdampfer entfernt.

### c) Herstellung OMS 3 (nicht Erfindungsgemäß):

In einem 1 L-Dreihalskolben mit KPG-Rührer, Intensivkühler und Tropftrichter wurden 118 g Vinyltriethoxysilan und 18 g 1-Octen vorgelegt und auf 100 °C geheizt. Anschließend wurden 15 ppm Pt in Form des Karstedt-Katalysators zugesetzt und 405 g eines SiH-funktionellen Siloxans der allgemeinen Formel (Me₃SiO_{1/2})₂(SiMe₂O_{2/2})₇₈(SiMeHO_{2/2})₁₀ langsam zudosiert. Die Dosiergeschwindigkeit wurde so gewählt, dass die Reaktionstemperatur nicht über 110 °C anstieg. Das Reaktionsgemisch wurde nach abgeschlossener Dosierung noch drei Stunden bei 100 °C gerührt. Anschließend wurden die flüchtigen Anteile im Ölpumpenvakuum bei 130 °C am Rotationsverdampfer entfernt.

### d) Herstellung OMS 4:

In einem 1 L-Dreihalskolben mit KPG-Rührer, Intensivkühler und Tropftrichter wurden 87 g Vinyltriethoxysilan und 163 g eines Allylpolyethers der allgemeinen Formel CH₂=CHCH₂-[CH₂CH₂O]₄[CH₂CH(Me)O]₂₀Me vorgelegt und auf 100 °C geheizt. Anschließend wurden 15 ppm Pt in Form des Karstedt-Katalysators zugesetzt und 405 g eines SiH-funktionellen Siloxans der allgemeinen Formel (Me₃SiO_{1/2})₂(SiMe₂O_{2/2})₇₈(SiMeHO_{2/2})₁₀ langsam zudosiert. Die Dosiergeschwindigkeit wurde so gewählt, dass die Reaktionstemperatur nicht über 110 °C anstieg. Das Reaktionsgemisch wurde nach abgeschlossener Dosierung noch drei Stunden bei 100 °C gerührt. Anschließend wurden die flüchtigen Anteile im Ölpumpenvakuum bei 130 °C am Rotationsverdampfer entfernt.

### 2) Herstellung von wässrigen Emulsionen der erfindungsgemäßen Siloxane

Zur Herstellung von wässrigen Emulsion der Wirkstoffe wurden 50 g eines Emulgatorgemisches bestehend aus einem ethoxylierten Triglycerid mit einem HLB-Wert (hydrophilic-lipophilic-balance-Wert, beschreibt den hydrophilen und lipophilen Anteil von hauptsächlich nichtionischen Tensiden und wurde 1954 von W. C. Griffin vorgeschlagen) von 18 und einem ethoxylierten Fettalkohol mit einem HLB-Wert von 11 im Massenverhältnis von 6:4 in 450 g Wasser unter Rühren mit einer Turbine gelöst. Zu einer solchen Lösung wurde die entsprechende organomodifizierte Siloxanverbindung aus den Beispielen 1a), 1b), 1c) oder 1d) gegeben. Es wurde jeweils soviel organomodifizierte Siloxanverbindung zugegeben, dass ein Gemisch erhalten wurde, welches 50 Massen-% an Siloxanverbindung aufweist. Die erhaltenen Gemische wurden 30 Minuten bei 2.000 U/min gerührt und mittels einer Emulgiermaschine (Spalthomogenisator) zu einer stabilen Emulsion verarbeitet.

### 3) Herstellung erfindungsgemäßer Mineralfaserbauteile

Zur anwendungstechnischen Austestung der erfindungsgemäßen Verbindungen wurde eine Reihe von Mineralfaserplatten hergestellt (siehe Tabelle 1). Diese wurden zum einen ohne den Zusatz eines Hydrophobierungsmittels hergestellt (Beispiel 1), unter Zusatz der erfindungsgemäßen Produkte OMS 1, OMS 2, OMS 3 und OMS 4 (Beispiel 2 bis 5), sowie unter Zusatz mit Hydrophobierungsmitteln nach dem Stand der Technik (Beispiel 6 und 7).

**Tabelle 1:**

| Hergestellte Mineralfaserplatten | |
|---|---|
| Mineralfaserplatte | Zugesetztes Hydrophobierungsmittel |
| Beispiel 1 (Blindwert) | Keines |
| Beispiel 2 (erfindungsgemäß) | OMS 1-Emulsion |
| Beispiel 3 (nicht Erfindungsgemäß ) | OMS 2-Emulsion |
| Beispiel 4 (erfindungsgemäß) | OMS 3-Emulsion |
| Beispiel 5 (erfindungsgemäß) | OMS 4-Emulsion |
| Beispiel 6 (nicht erfindungsgemäß) | SITREN® 595 |
| Beispiel 7 (nicht erfindungsgemäß) | SITREN® 245 |

Bei den Hydrophobierungsmitteln nach dem Stand der Technik handelt es sich um kommerziell erhältliche Produkte der Evonik Goldschmidt GmbH (Essen, Germany). SITREN® 595 ist ein aminofunktionelles Siloxan, SITREN® 245 ein nicht erfindungsgemäßes alkoxyfunktionelles Siloxan (SITREN® ist ein Warenzeichen der Evonik Goldschmidt GmbH).

Die Rezeptur zur Herstellung der Mineralfaserplatten ist in Tabelle 2 angegeben:

**Tabelle 2:**

| Rezeptur zur Herstellung der Mineralfaserplatten | | | | |
|---|---|---|---|---|
| Position | Rohstoff | *m* | *V* | *w** |
| 1 | Steinwolle | 120 g | | 54 % |
| 2 | Ton (weiß-grau) | 96,0 g | | 43 % |
| 3 | Stärke | 7,25 g | | 3 % |
| 4 | Wasser | | 1,7 L | |
| 5 | Flockungsmittel (PRAESTOL 2440, Ashland) | | 0,1 L | |

| | | | | |
|---|---|---|---|---|
| * w = Massenanteil an Gesamtfeststoffeinwaage | | | | |

Die Herstellung der Mineralfaserplatten erfolgte wie folgt:
Zunächst wurde das Wasser (Position 4) in einem 10 l Eimer vorgelegt und mit einem Farbmischrührer gerührt (Rührgeschwindigkeit 700 U/min, Dispergierscheibe ø 125 X 20 mm). Anschließend wurde die Steinwolle (Position 1) eingerührt. Bei der Herstellung der Beispiele 2 bis 7 wurde anschließend jeweils 0,89 g des in Tabelle 1 angegebenen Hydrophobierungsmittels zugesetzt (0,4 Gew.-% bezogen auf die Summe der Positionen 1 bis 3). Es wurde mindestens eine Minute gerührt. Danach wurden der Ton (Position 2) und die Stärke (Position 3) eingerührt, fünf Minuten gemischt und schließlich das Flockungsmittel (Position 5) hinzugegeben. Die "Slurry" muss nach Zugabe von Position 5 ausflocken. Die Mischung wurde über einen Schwarzbandfilter mit einer handelsüblichen Nutsche unter Verwendung eines Wasserstrahlvakuums abgenutscht. Während des Nutschens wird der Filterkuchen mit einem Glastopfen gepresst. Danach wurde 30 Minuten nachgesaugt und die erhaltende Mineralfaserplatte bei 170 °C in einem Umlufttrockenschrank 1,5 h lang getrocknet.

### 4) Anwendungstechnische Ausprüfung der Beispiele

Zur anwendungstechnischen Ausprüfung der Beispiele wurde die Wasseraufnahme bestimmt, indem die hergestellten Platten 24 Stunden im Wasserbad mit 2 cm Überstand gelagert wurden. In Tabelle 3 sind die Ergebnisse aufgeführt. Die Massenzunahme wird relativ zur Massenzunahme des Blindwertes angegeben (Wasseraufnahme des Blindwert = 100 %).

**Tabelle 3:**

| Ergebnisse der anwendungstechnischen Austestung | |
|---|---|
| Produkt | Wasseraufnahme in Relation zur unbehandelten Platte (Blindwert) % |
| Beispiel 1 (Blindwert) | 100 % |
| Beispiel 2 | +++ |
| Beispiel 3 | ++ |
| Beispiel 4 | ++ |
| Beispiel 5 | + |
| Standard SITREN 595 (aminofuntionelles Siloxan, nicht erfindungsgemäß) | -- |
| Standard SITREN 245, (alkoxyfunktionelles Siloxan, nicht erfindungsgemäß) | 0 |

| | |
|---|---|
| Legende: +++ = sehr geringe Wasseraufnahme, sehr gute Hydrophobierung ++ = geringe Wasseraufnahme, gute Hydrophobierung + = geringe Wasseraufnahme, Hydrophobierung besser als Beispiele des Standes der Technik 0 = hohe Wasseraufnahme, Hydrophobierung analog dem besten bekannten Stand der Technik -- = sehr hohe Wasseraufnahme, nur untergeordnete Hydrophobierung. | |

**Fazit:** Die Ergebnisse zeigen, dass bei Verwendung der erfindungsgemäßen Siloxane die Wasseraufnahme der Mineralfaserbauteile deutlich stärker reduziert wird, als bei Verwendung von Hydrophobierungsmitteln nach dem Stand der Technik.

## Patentansprüche

1. Verfahren zur Hydrophobierung von Mineralfaserbauteilen, **dadurch gekennzeichnet, dass** bei der Herstellung der Mineralfaserbauteile Siloxane der allgemeinen Formel (I) zugesetzt werden,
Mₐ M'_{b} D_{c} D'_{d} D^{alkoxy}ₑ T_{f} Q_{g} (I)
wobei
M = (R¹₃SiO_{1/2}), M' = (R¹₂R²SiO_{1/2})
D = (R¹₂SiO_{2/2}), D' = (R¹R³SiO_{2/2}),
D^{alkoxy} = (R¹R⁴SiO_{2/2}),
T = (R¹SiO_{3/2}), Q = (SiO_{4/2})
a = 0 - 22,
b = 0 - 22,
c = 5 - 400,
d = 0 - 20,
e = 0 - 40,
f = 0 - 10,
g = 0 - 10, mit der Maßgabe, dass gilt a + b ist größer oder gleich 2 und b + e größer oder gleich 2,
R¹ = Methyl oder Phenyl,
R² = gleiche oder verschiedene Reste aus der Gruppe R³, R⁴, für e kleiner oder gleich 1 gilt R² = R⁴,
R³ = gleiche oder verschiedene Polyetherreste,
R⁴ = gleiche oder verschiedene Reste der allgemeinen Formel (III) - (CH₂)ₖ-Si(R⁶)ₗ(OR⁶)₃₋ₗ (III)
k = 2 - 12,
l = 0 - 2,
R⁶ = gleiche oder verschiedene Alkyl- oder Aryl-Reste.

2. Verfahren nach Anspruch 1, wobei
a = 0 - 10, b = 0 - 10, c = 10 - 200, d = 0 - 10, e = 0 - 30, f = 0 - 4, g = 0 - 4 ist.

3. Verfahren nach Anspruch 1, wobei
a = 0 - 2, b = 0 - 2, c = 15 - 150, d = 0, e = 0 - 20, f = 0, g = 0 ist.

4. Verfahren nach zumindest einem der Ansprüche 1 bis 3, wobei
R³ = gleichen oder verschiedenen Polyetherresten der allgemeinen Formel (II) ist, 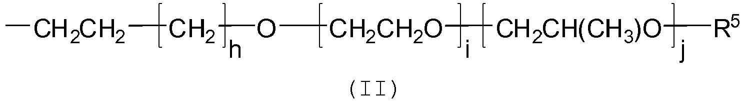 h = 0 - 10, i = 0 - 60, j = 0 - 60 und i + j größer oder gleich 3 ist, sowie
R⁵ = gleichen oder verschiedenen Resten aus der Gruppe Alkyl, Aryl, H oder -C(O)R⁶ entspricht.

5. Verfahren nach Anspruch 4, wobei
h = 1, i = 0 - 40, j = 0 - 40, i + j größer oder gleich 3 und R⁵ = H, Methyl, Ethyl, Phenyl oder Acetyl ist.

6. Verfahren nach Anspruch 1 bis 5, wobei k = 2 - 3, l = 0 - 1 und R⁶ = Methyl, Ethyl, Propyl, Butyl- oder Phenyl ist.

7. Verfahren nach Anspruch 1 bis 5, wobei k = 2, l = 0 und R⁶ = Methyl oder Ethyl ist.

8. Verfahren nach zumindest einem der Ansprüche 1 bis 7, **dadurch gekennzeichnet, dass** das Hydrophobierungsmittel der Formel (I) pur, als Lösung oder als Emulsion der Binderlösung zugesetzt wird oder über eine separate Sprühvorrichtung appliziert wird.

9. Mineralfaserbauteile, die unter Verwendung von Hydrophobierungsmitteln der Formel (I) hergestellt wurden.

10. Hydrophobierte Mineralfaserbauteile nach Anspruch 9 beinhaltend 30 - 75 Gew.-% Mineralfasern, 20 - 40 Gew.-% Ton und 3 - 4 Gew.-% Stärke sowie weitere übliche Bestandteile und Zuschlags- und Hilfsstoffe.

## Claims

1. Process for hydrophobizing mineral fibre components, **characterized in that**, in the production of the mineral fibre components, siloxanes of the general Formula (I) are added
Mₐ M'_{b} D_{c} D'_{d} D^{alkoxy}ₑ T_{f} Q_{g} (I)
in which
M = (R¹₃SiO_{1/2}), M' = (R¹₂R²SiO_{1/2})
D = (R¹₂SiO_{2/2}), D' = (R¹R³SiO_{2/2}),
D^{alkoxy} = (R¹R⁴SiO_{2/2}),
T = (R¹SiO_{3/2}), Q = (SiO_{4/2})
a = 0 - 22,
b = 0 - 22,
c = 5 - 400,
d = 0 - 20,
e = 0 - 40,
f = 0 - 10,
g = 0 - 10, with the proviso that a + b is greater than or equal to 2 and b + e is greater than or equal to 2,
R¹ = methyl or phenyl,
R² = identical or different radicals from the group R³, R⁴, for e less than or equal to 1, R² = R⁴,
R³ = identical or different polyether radicals,
R⁴ = identical or different radicals of the general Formula (III)
-(CH₂)ₖ-Si(R⁶)ₗ(OR⁶)₃₋ₗ (III)
k = 2 - 12,
l= 0 - 2,
R⁶ = identical or different alkyl or aryl radicals.

2. Process according to Claim 1, in which
a = 0 - 10, b = 0 - 10, c = 10 - 200, d = 0 - 10, e = 0 - 30, f = 0 - 4, g = 0 - 4.

3. Process according to Claim 1, in which a = 0 - 2, b = 0 - 2, c = 15 - 150, d = 0, e = 0 - 20, f = 0, g = 0.

4. Process according to at least one of Claims 1 to 3, in which
R³ = identical or different polyether radicals of the general Formula (II), 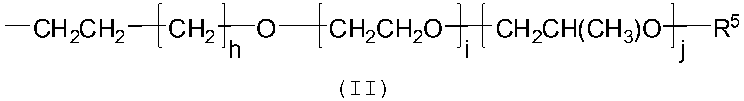 h = 0 - 10, i = 0 - 60, j = 0 - 60 and i + j is greater than or equal to 3, and
R⁵ = corresponds to identical or different radicals from the group consisting of alkyl, aryl, H or -C(O)R⁶.

5. Process according to Claim 4, in which h = 1, i = 0 - 40, j = 0 - 40, i + j is greater than or equal to 3 and R⁵ = H, methyl, ethyl, phenyl or acetyl.

6. Process according to Claims 1 to 5, in which k = 2 - 3, l= 0 - 1 and R⁶ = methyl, ethyl, propyl, butyl or phenyl.

7. Process according to Claims 1 to 5, in which k = 2, l= 0 and R⁶ = methyl or ethyl.

8. Process according to at least one of Claims 1 to 7, **characterized in that** the water repellent of the Formula (I) is added in pure form, as a solution or as an emulsion to the binder solution or is applied via a separate spray apparatus.

9. Mineral fibre components which were produced with the use of water repellents of the Formula (I).

10. Hydrophobized mineral fibre components according to Claim 9, comprising 30 - 75% by weight of mineral fibres, 20 - 40% by weight of clay and 3 - 4% by weight of starch and further customary constituents and loading materials and auxiliaries.

## Revendications

1. Procédé d'hydrophobation de composants à base de fibres minérales, **caractérisé en ce que**, lors de la fabrication des composants à base de fibres minérales, des siloxanes de formule générale (I) sont ajoutés
Mₐ M'_{b} D_{c} D'_{d} D^{alcoxy}ₑ T_{f} Q_{g} (I)
dans laquelle
M = (R¹₃SiO_{1/2}), M' = (R¹₂R²SiO_{1/2})
D = (R¹₂SiO_{2/2}), D' = (R¹R³SiO_{2/2}),
D^{alcoxy} = (R¹R⁴SiO_{2/2}),
T = (R¹SiO_{3/2}), Q = (SiO_{4/2}),
a = 0 à 22,
b = 0 à 22,
c = 5 à 400,
d = 0 à 20,
e = 0 à 40,
f = 0 à 10,
g = 0 à 10,
à condition que a+b soit supérieur ou égal à 2 et que b+e soit supérieur ou égal à 2,
R¹ = méthyle ou phényle,
R² = radicaux identiques ou différents du groupe constitué par R³, R⁴,
pour e inférieur ou égal à 1, R² = R⁴,
R³ = radicaux polyéther identiques ou différents,
R⁴ = radicaux identiques ou différents de formule générale (III)
-(CH₂)ₖ-Si(R⁶)ₗ(OR⁶)₃₋ₗ (III)
k = 2 à 12,
l= 0 à 2,
R⁶ = radicaux alkyle ou aryle identiques ou différents.

2. Procédé selon la revendication 1, dans lequel
a = 0 à 10, b = 0 à 10, c = 10 à 200, d = 0 à 10, e = 0 à 30, f = 0 à 4, g = 0 à 4.

3. Procédé selon la revendication 1, dans lequel
a = 0 à 2, b = 0 à 2, c = 15 à 150, d = 0, e = 0 à 20, f = 0, g = 0.

4. Procédé selon au moins l'une quelconque des revendications 1 à 3, dans lequel
R³ = radicaux polyéther identiques ou différents de formule générale (II) 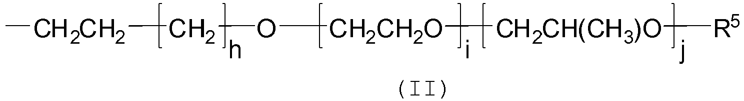 h = 0 à 10, i = 0 à 60, j = 0 à 60, et i+j supérieur ou égal à 3, et
R⁵ = radicaux identiques ou différents du groupe constitué par alkyle, aryle, H ou -C(O)R⁶.

5. Procédé selon la revendication 4, dans lequel h = 1, i = 0 à 40, j = 0 à 40, i+j supérieur ou égal à 3, et R⁵ = H, méthyle, éthyle, phényle ou acétyle.

6. Procédé selon les revendications 1 à 5, dans lequel k = 2 à 3, l = 0 à 1 et R⁶ = méthyle, éthyle, propyle, butyle ou phényle.

7. Procédé selon les revendications 1 à 5, dans lequel k = 2, l = 0 et R⁶ = méthyle ou éthyle.

8. Procédé selon au moins l'une quelconque des revendications 1 à 7, **caractérisé en ce que** l'agent d'hydrophobation de formule (I) est ajouté sous forme pure, sous la forme d'une solution ou sous la forme d'une émulsion à la solution de liant, ou appliqué par un dispositif de pulvérisation séparé.

9. Composants à base de fibres minérales, qui ont été fabriqués en utilisant des agents d'hydrophobation de formule (I).

10. Composants à base de fibres minérales hydrophobés selon la revendication 9, contenant 30 à 75 % en poids de fibres minérales, 20 à 40 % en poids d'argile et 3 à 4 % en poids d'amidon, ainsi que d'autres constituants et additifs et adjuvants usuels.
